# EUROPÄISCHE PATENTSCHRIFT

(11) **EP 3 874 938 B1**
(45) Veröffentlichungstag und Bekanntmachung des Hinweises auf die Patenterteilung: **06.08.2025**
(21) Anmeldenummer: 20161295.9
(22) Anmeldetag: 05.03.2020
(51) Int. Cl.: A01G 20/47, B02C 18/00, B02C 18/16

(54) **HANDGEFÜHRTES BEARBEITUNGSSYSTEM, HANDGEFÜHRTES BEARBEITUNGSGERÄT FÜR EIN HANDGEFÜHRTES BEARBEITUNGSSYSTEM UND ANBAUTEIL FÜR EIN HANDGEFÜHRTES BEARBEITUNGSSYSTEM**
HANDHELD PROCESSING SYSTEM, HANDHELD PROCESSING APPARATUS FOR A HANDHELD PROCESSING SYSTEM AND ACCESSORY FOR A HANDHELD PROCESSING SYSTEM
SYSTÈME D'USINAGE GUIDÉ À LA MAIN, DISPOSITIF D'USINAGE GUIDÉ À LA MAIN POUR UN SYSTÈME D'USINAGE GUIDÉ À LA MAIN ET PIÈCE RAPPORTÉE POUR UN SYSTÈME D'USINAGE GUIDÉ À LA MAIN

(43) Veröffentlichungstag der Anmeldung: 08.09.2021
(73) Patentinhaber: Andreas Stihl AG & Co. KG, 71336 Waiblingen (DE)
(72) Erfinder: Oesterle, Markus, 71566 Althütte (DE); Seiz, Jonathan, 70376, Stuttgart (DE); Kuschewski, Mario, 71263 Weil der Stadt (DE)
(74) Vertreter: Patentanwälte Ruff, Wilhelm, Beier, Dauster & Partner mbB

(56) Entgegenhaltungen:
- CN-A- 103 774 597
- JP-B2- 4 635 990
- US-A- 5 711 048
- US-A1- 2008 127 448

## Beschreibung

Die Erfindung bezieht sich auf ein handgeführtes Bearbeitungssystem, ein handgeführtes Bearbeitungsgerät für ein, insbesondere solches, handgeführtes Bearbeitungssystem und Anbauteil für ein, insbesondere solches, handgeführtes Bearbeitungssystem.

Die US 2008/0127448 A1 offenbart ein handgeführtes Blasgerät, das ein Gehäuse besitzt, in dem ein Antriebsmotor angeordnet ist, der ein Gebläserad rotierend antreibt. Das Gebläserad saugt einen Luftstrom über eine Ansaugöffnung an und fördert den Luftstrom durch eine Ausblasöffnung des Gehäuses. Das Blasgerät besitzt mindestens ein lösbar im Bereich einer der Öffnungen mit dem Gehäuse verbindbares Anbauteil. Es ist vorgesehen, dass das Blasgerät mindestens einen Schalter aufweist, der bei an der Öffnung festgelegtem Anbauteil betätigt ist, wobei der Antriebsmotor nur bei betätigtem Schalter betriebsbereit ist.

Die JP 4635990 B2 offenbart eine Sicherheitseinrichtung einer Montagemaschine.

Die US 5,711,048 A offenbart eine/n portables/n Gebläse/Sauger.

Die CN 103774597 A offenbart ein Gebläse.

### AUFGABE UND LÖSUNG

Der Erfindung liegt als Aufgabe die Bereitstellung eines handgeführten Bearbeitungssystems, eines handgeführten Bearbeitungsgeräts für ein handgeführtes Bearbeitungssystem und/oder eines Anbauteils für ein handgeführtes Bearbeitungssystem zugrunde, das, insbesondere jeweils, verbesserte Eigenschaften aufweist, insbesondere benutzersicherer und benutzerfreundlicher ist.

Die Erfindung löst diese Aufgabe durch die Bereitstellung eines handgeführten Bearbeitungssystems mit den Merkmalen des Anspruchs 1, eines handgeführten Bearbeitungsgeräts mit den Merkmalen des Anspruchs 14 und/oder eines Anbauteils mit den Merkmalen des Anspruchs 15. Vorteilhafte Weiterbildungen und/oder Ausgestaltungen der Erfindung sind in den abhängigen Ansprüchen beschrieben.

Das erfindungsgemäße handgeführte Bearbeitungssystem umfasst bzw. weist ein handgeführtes Bearbeitungsgerät und mindestens ein Anbauteil auf. Das Bearbeitungsgerät umfasst bzw. weist ein bewegliches, insbesondere rotationsbewegliches, Bearbeitungsteil und ein Elektroantriebsmotorsystem zur Bewegung bzw. zum Antrieb des Bearbeitungsteils auf. Das Elektroantriebsmotorsystem umfasst bzw. weist mindestens einen elektrischen Pfad mit mindestens einer Unterbrechung auf. Das mindestens eine Anbauteil umfasst bzw. weist, insbesondere jeweils, eine Kontaktbrücke auf. Das Bearbeitungsgerät und das mindestens eine Anbauteil sind zur räumlichen Anordnung des mindestens einen Anbauteils, insbesondere mit der jeweiligen Kontaktbrücke, von einer, insbesondere jeweiligen, Gefahrenstellung in eine von der Gefahrenstellung verschiedene, insbesondere jeweilige, Sicherheitsstellung an dem Bearbeitungsgerät derart ausgebildet bzw. konfiguriert, dass durch das mindestens eine Anbauteil bzw. aufgrund des mindestens einen Anbauteils in der Gefahrenstellung die mindestens eine Kontaktbrücke die mindestens eine, insbesondere zugeordnete, Unterbrechung nicht elektrisch überbrückt, und dass durch die Anordnung bzw. aufgrund der Anordnung des mindestens einen Anbauteils in der Sicherheitsstellung, insbesondere von der Gefahrenstellung in die Sicherheitsstellung, insbesondere automatisch, die mindestens eine Kontaktbrücke die mindestens eine, insbesondere zugeordnete, Unterbrechung, insbesondere unmittelbar, elektrisch überbrückt. Das Bearbeitungsgerät ist ein Blasgerät, ein Sauggerät und/oder ein Häckselgerät, insbesondere ein Saughäckselgerät.

Dies, insbesondere dass die mindestens eine Kontaktbrücke die mindestens eine Unterbrechung durch das mindestens eine Anbauteil in der Gefahrenstellung nicht elektrisch überbrückt, ermöglicht eine, insbesondere automatische, Vermeidung bzw. Verhinderung einer Bewegung des Bearbeitungsteils durch das Elektroantriebssystem. Somit ermöglicht dies eine hohe Benutzersicherheit.

Zusätzlich ermöglicht dies, insbesondere dass die mindestens eine Kontaktbrücke die mindestens eine Unterbrechung durch die Anordnung des mindestens eine Anbauteils in der Sicherheitsstellung elektrisch überbrückt, eine, insbesondere automatische, Ausbildung des Elektroantriebsmotorsystems zur Bewegung des Bearbeitungsteils. Somit ermöglicht dies eine hohe Benutzerfreundlichkeit.

Insbesondere kann die mindestens eine Kontaktbrücke im Fehlerfall ermöglichen, dass die mindestens eine Kontaktbrücke die mindestens eine Unterbrechung nicht elektrisch überbrücken kann. Somit kann dies die Vermeidung einer Bewegung des Bearbeitungsteils durch das Elektroantriebssystem und somit eine besonders hohe Benutzersicherheit ermöglichen. Dies insbesondere im Unterschied zu einem Schalter, der im Fehlerfall möglicherweise eine Bewegung des Bearbeitungsteils durch das Elektroantriebssystem zulassen könnte.

Insbesondere kann durch das mindestens eine Anbauteil in der Gefahrenstellung das Bearbeitungsteil für einen Benutzer, insbesondere eine Hand oder mindestens einen Finger des Benutzers, zugänglich sein und durch die Anordnung des mindestens einen Anbauteils in der Sicherheitsstellung kann das Bearbeitungsteil für den Benutzer schwerer oder nicht zugänglich sein.

Das Bearbeitungsgerät und das mindestens eine Anbauteil können zu einer, insbesondere werkzeugfreien und/oder zerstörungsfreien, Lösung des mindestens einen Anbauteils, insbesondere mit der jeweiligen Kontaktbrücke, aus der Sicherheitsstellung derart ausgebildet sein, dass durch die Lösung des mindestens einen Anbauteils aus der Sicherheitsstellung, insbesondere automatisch, die mindestens eine Kontaktbrücke die mindestens eine Unterbrechung nicht, insbesondere mehr, elektrisch überbrücken kann, insbesondere überbrückt.

Das Bearbeitungsgerät und das mindestens eine Anbauteil können zur mechanischen Verbindung des Bearbeitungsgeräts und des mindestens einen Anbauteils, insbesondere mindestens in der Sicherheitsstellung, ausgebildet sein.

Die Kontaktbrücke kann derart mit einem anderen Teil des Anbauteils mechanisch verbunden sein, dass die Kontaktbrücke nicht, insbesondere werkzeugfrei und/oder zerstörungsfrei, durch den Benutzer von dem anderen Teil des Anbauteils gelöst werden kann, insbesondere anders als das Anbauteil aus der Sicherheitsstellung gelöst werden könnte.

Das handgeführte (Englisch: hand-held) Bearbeitungssystem kann ein handgetragenes (Englisch: hand-portable) Bearbeitungssystem sein und/oder das handgeführte (Englisch: hand-held) Bearbeitungsgerät kann ein handgetragenes (Englisch: hand-portable) Bearbeitungsgerät sein. Zusätzlich oder alternativ kann handgeführtes, insbesondere handgetragenes, Bearbeitungssystem und/oder handgeführtes, insbesondere handgetragenes, Bearbeitungsgerät bedeuten, dass das Bearbeitungssystem und/oder das Bearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann. Weiter zusätzlich oder alternativ kann das Bearbeitungssystem ein Garten-, Forst- und/oder Baubearbeitungssystem sein und/oder das Bearbeitungsgerät kann ein Garten-, Forst- und/oder Baubearbeitungsgerät sein.

In einer Weiterbildung der Erfindung umfasst bzw. weist das Bearbeitungsgerät ein Gerätegehäuse auf. In dem Gerätegehäuse ist das Bearbeitungsteil, insbesondere vollständig, räumlich angeordnet. Das Gerätegehäuse hat bzw. weist mindestens eine Zugangsöffnung zu dem Bearbeitungsteil auf. Das mindestens eine Anbauteil in der Sicherheitsstellung umschließt, insbesondere verschließt, insbesondere räumlich, die mindestens eine, insbesondere zugeordnete, Zugangsöffnung, insbesondere für den Benutzer, insbesondere die Hand oder mindestens den Finger des Benutzers. Das mindestens eine Anbauteil in der Gefahrenstellung umschließt, insbesondere verschließt, insbesondere räumlich, nicht die mindestens eine, insbesondere zugeordnete, Zugangsöffnung, insbesondere für den Benutzer. Dies ermöglicht, dass durch das mindestens eine Anbauteil in der Gefahrenstellung das Bearbeitungsteil für den Benutzer zugänglich sein kann und durch die Anordnung des mindestens einen Anbauteils in der Sicherheitsstellung das Bearbeitungsteil für den Benutzer schwerer oder nicht zugänglich sein kann. Insbesondere kann oder braucht das mindestens eine Anbauteil in der Sicherheitsstellung die mindestens eine Zugangsöffnung gasdurchlässig bzw. nicht gasdicht verschließen.

In einer Weiterbildung der Erfindung umfasst bzw. weist das Bearbeitungsteil ein Strömungslaufrad und/oder ein Messerrad, insbesondere ein Strömungslauf- und Messerrad, auf, insbesondere ist das Bearbeitungsteil ein Strömungslaufrad und/oder ein Messerrad, insbesondere ein Strömungslauf- und Messerrad. Weiter zusätzlich oder alternativ umfasst bzw. weist das mindestens eine Anbauteil eine Blasleitung, insbesondere ein Blasrohr, eine Saugleitung, insbesondere ein Saugrohr, einen, insbesondere gasdurchlässigen und/oder nicht benutzerdurchlässigen, Fangsack und/oder ein, insbesondere gasdurchlässiges und/oder nicht benutzerdurchlässiges, Sicherheitsgitter auf.

In einer Ausgestaltung der Erfindung ist das Anbauteil aufweisend das Sicherheitsgitter an dem Bearbeitungsgerät fest angeordnet bzw. befestigt und zur räumlichen Verstellung, insbesondere Schwenkung, insbesondere Verschwenkung, zwischen der Gefahrenstellung und der Sicherheitsstellung ausgebildet bzw. konfiguriert. Dies ermöglicht ein Risiko eines Verlierens des Sicherheitsgitters zu reduzieren oder sogar zu vermeiden. Zusätzlich oder alternativ ermöglicht dies eine hohe Benutzerfreundlichkeit.

In einer Ausgestaltung der Erfindung umfasst bzw. weist das Bearbeitungssystem mindestens zwei Anbauteile auf. Das Bearbeitungsgerät, eines der Anbauteile aufweisend das Sicherheitsgitter in der Gefahrenstellung und ein anderes der Anbauteile sind zu der Anordnung des anderen Anbauteils in die Sicherheitsstellung des Anbauteils aufweisend das Sicherheitsgitter ausgebildet bzw. konfiguriert. Dies ermöglicht eine Multifunktion des Bearbeitungssystems, insbesondere des Bearbeitungsgeräts. Insbesondere kann das andere Anbauteil die Saugleitung aufweisen.

In einer Weiterbildung der Erfindung umfasst bzw. weist das Bearbeitungssystem mindestens zwei Anbauteile auf. Das Elektroantriebsmotorsystem weist den Pfad mit mindestens zwei in Serie bzw. Reihe geschalteten Unterbrechungen auf. Die Anbauteile weisen jeweils die, insbesondere die jeweilige, Kontaktbrücke auf. Dies ermöglicht eine einfache und somit kostengünstige Herstellung des Bearbeitungssystems, insbesondere des Bearbeitungsgeräts.

In einer Ausgestaltung der Erfindung umfasst bzw. weist das Elektroantriebsmotorsystem ein, insbesondere einstückiges, Serienschaltungs-Kontaktstück auf. Das Serienschaltungs-Kontaktstück umfasst bzw. weist zwei Kontaktabschnitte zur, insbesondere unmittelbaren und/oder elektrischen, Kontaktierung der zwei Kontaktbrücken und einen Abstandsausgleichsabschnitt, insbesondere räumlich, zwischen den Kontaktabschnitten zum Ausgleich einer Toleranz eines Abstands zwischen den Kontaktbrücken auf. Dies ermöglicht eine einfache Anordnung der Anbauteile. Insbesondere kann der Abstandsausgleichsabschnitt federnd bzw. elastisch sein.

In einer Weiterbildung der Erfindung umfasst bzw. weist das Bearbeitungssystem, insbesondere die, mindestens zwei Anbauteile auf. Das Elektroantriebsmotorsystem weist den mindestens einen Pfad mit, insbesondere den, mindestens zwei Unterbrechungen auf. Die Anbauteile weisen jeweils die, insbesondere die jeweilige, Kontaktbrücke auf. Das Bearbeitungsgerät und die Anbauteile sind zu der Anordnung in die jeweilige Sicherheitsstellung in zueinander nicht-parallelen, insbesondere orthogonalen, Anordnungsrichtungen ausgebildet bzw. konfiguriert. Dies ermöglicht einen guten Verlauf, insbesondere Strömungs- und/oder Gutverlauf in dem Bearbeitungsgerät.

In einer Weiterbildung der Erfindung umfasst bzw. weist das Bearbeitungssystem, insbesondere die, mindestens zwei Anbauteile auf. Das Elektroantriebsmotorsystem weist den mindestens einen Pfad mit, insbesondere den, mindestens zwei Unterbrechungen auf. Die Anbauteile weisen jeweils die, insbesondere die jeweilige, Kontaktbrücke auf. Das Bearbeitungsgerät und die Anbauteile definieren, insbesondere räumlich, eine, insbesondere zeitliche, Reihenfolge zu der Anordnung in die jeweilige Sicherheitsstellung und/oder zu einer Lösung aus der jeweiligen Sicherheitsstellung. Dies ermöglicht einen kompakten Aufbau und/oder eine intuitive Handhabung des Bearbeitungssystems, insbesondere des Bearbeitungsgeräts.

In einer Weiterbildung der Erfindung umfasst bzw. weist das Elektroantriebsmotorsystem mindestens zwei, insbesondere einstückige, Kontaktstücke auf. Die Kontaktstücke sind zur, insbesondere unmittelbaren und/oder elektrischen, Kontaktierung der mindestens einen Kontaktbrücke und baugleich ausgebildet bzw. konfiguriert. Dies ermöglicht eine einfache und somit kostengünstige Herstellung des Bearbeitungssystems, insbesondere des Bearbeitungsgeräts.

In einer Weiterbildung der Erfindung umfasst bzw. weist das Elektroantriebsmotorsystem mindestens ein, insbesondere das mindestens eine, Kontaktstück und/oder ein, insbesondere das, Serienschaltungs-Kontaktstück auf. Das Kontaktstück und/oder das Serienschaltungs-Kontaktstück sind/ist, insbesondere jeweils, zur, insbesondere unmittelbaren und/oder elektrischen, Kontaktierung der mindestens einen Kontaktbrücke ausgebildet bzw. konfiguriert und schwimmend gelagert, insbesondere gegenüber einem, insbesondere dem, Gerätegehäuse des Bearbeitungsgeräts. Dies ermöglicht einen Toleranzausgleich und/oder ein Risiko eines Frettings zu reduzieren oder sogar zu vermeiden.

In einer Weiterbildung der Erfindung umfasst bzw. weist die Kontaktbrücke eine Steckbrücke auf, insbesondere ist die Kontaktbrücke eine Steckbrücke. Dies ermöglicht eine einfache Anordnung und/oder Lösung der Kontaktbrücke.

In einer Weiterbildung der Erfindung ist der mindestens eine Pfad ein Leistungspfad zur, insbesondere elektrischen, Leitung von, insbesondere elektrischer, Antriebsleistung und/oder ein Steuerpfad zur, insbesondere elektrischen, Leitung eines, insbesondere elektrischen, Steuersignals, insbesondere eines Steuerstroms und/oder einer Steuerspannung.

Das erfindungsgemäße handgeführte Bearbeitungsgerät ist für ein handgeführtes Bearbeitungssystem, insbesondere das handgeführte Bearbeitungssystem, wie zuvor beschrieben ausgebildet bzw. konfiguriert. Das Bearbeitungsgerät weist ein bewegliches Bearbeitungsteil, insbesondere das bewegliche Bearbeitungsteil, und ein, insbesondere das, Elektroantriebsmotorsystem zur Bewegung des Bearbeitungsteils auf. Das Elektroantriebsmotorsystem weist mindestens einen, insbesondere den mindestens einen, elektrischen Pfad mit mindestens einer, insbesondere der mindestens einen, Unterbrechung auf. Das Bearbeitungsgerät ist zur räumlichen Anordnung mindestens eines, insbesondere des mindestens einen, Anbauteils von einer, insbesondere der, Gefahrenstellung in eine, insbesondere die, von der Gefahrenstellung verschiedene Sicherheitsstellung an dem Bearbeitungsgerät derart ausgebildet, dass durch das mindestens eine Anbauteil in der Gefahrenstellung mindestens eine, insbesondere die mindestens eine, Kontaktbrücke des mindestens einen Anbauteils die mindestens eine Unterbrechung nicht elektrisch überbrückt, und dass durch die Anordnung des mindestens einen Anbauteils in der Sicherheitsstellung die mindestens eine Kontaktbrücke die mindestens eine Unterbrechung elektrisch überbrückt. Das Bearbeitungsgerät ist ein Blasgerät, ein Sauggerät und/oder ein Häckselgerät, insbesondere ein Saughäckselgerät. Das Bearbeitungsgerät ermöglicht die gleichen Vorteile wie zuvor für das Bearbeitungssystem beschrieben. Insbesondere kann das Bearbeitungsgerät wie zuvor beschrieben ausgebildet sein.

Das erfindungsgemäße Anbauteil ist für ein handgeführtes Bearbeitungssystem, insbesondere das handgeführte Bearbeitungssystem, wie zuvor beschrieben ausgebildet bzw. konfiguriert. Das Anbauteil weist eine, insbesondere die, Kontaktbrücke auf. Das Anbauteil ist zur räumlichen Anordnung von einer, insbesondere der, Gefahrenstellung in eine, insbesondere die, von der Gefahrenstellung verschiedene Sicherheitsstellung an einem, insbesondere dem, handgeführten Bearbeitungsgerät derart ausgebildet, dass durch das Anbauteil in der Gefahrenstellung die Kontaktbrücke eine, insbesondere die, Unterbrechung eines, insbesondere des, elektrischen Pfads eines, insbesondere des, Elektroantriebsmotorsystems des Bearbeitungsgeräts nicht elektrisch überbrückt, und dass durch die Anordnung des Anbauteils in der Sicherheitsstellung die Kontaktbrücke die Unterbrechung elektrisch überbrückt. Das Anbauteil umfasst bzw. weist eine Blasleitung, insbesondere ein Blasrohr, eine Saugleitung, insbesondere ein Saugrohr, einen, insbesondere gasdurchlässigen und/oder nicht benutzerdurchlässigen, Fangsack und/oder ein, insbesondere gasdurchlässiges und/oder nicht benutzerdurchlässiges, Sicherheitsgitter auf. Das Anbauteil ermöglicht die gleichen Vorteile wie zuvor für das Bearbeitungssystem beschrieben. Insbesondere kann das Anbauteil wie zuvor beschrieben ausgebildet sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen handgeführten Bearbeitungssystems aufweisend ein erfindungsgemäßes handgeführtes Bearbeitungsgerät und zwei erfindungsgemäße Anbauteile aufweisend eine Blasleitung und ein Sicherheitsgitter,
- Fig. 2: eine Perspektivansicht eines elektrischen Pfades mit zwei Unterbrechungen eines Elektroantriebsmotorsystems des Bearbeitungsgeräts der Fig. 1,
- Fig. 3: eine Perspektivansicht des Pfades der Fig. 2 und von zwei Kontaktbrücken der Anbauteile der Fig. 1,
- Fig. 4: eine schematischer Schaltplan des Pfades der Fig. 2 und der zwei Kontaktbrücken der Anbauteile der Fig. 1,
- Fig. 5: eine Perspektivansicht des Bearbeitungssystems der Fig. 1 aufweisend das Bearbeitungsgerät und ein erfindungsgemäßes Anbauteil aufweisend das Sicherheitsgitter,
- Fig. 6: eine Perspektivansicht des Bearbeitungssystems der Fig. 1 aufweisend das Bearbeitungsgerät und drei erfindungsgemäße Anbauteile aufweisend das Sicherheitsgitter, eine Saugleitung und einen Fangsack,
- Fig. 7: eine weitere Perspektivansicht des Bearbeitungssystems der Fig. 6,
- Fig. 8: eine nochmals weitere Perspektivansicht des Bearbeitungssystems der Fig. 6,
- Fig. 9: eine Perspektivansicht des Bearbeitungssystems der Fig. 6 mit gelöstem Anbauteil aufweisend den Fangsack, und
- Fig. 10: eine Perspektivansicht des Bearbeitungssystems der Fig. 6 mit gelöstem Anbauteil aufweisend die Saugleitung.

### DETAILLIERTE BESCHREIBUNG DER AUSFÜHRUNGSBEISPIELE

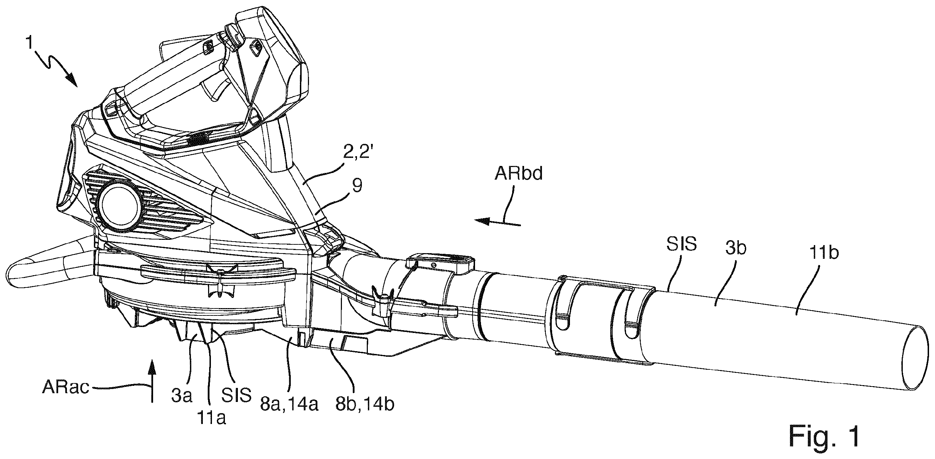

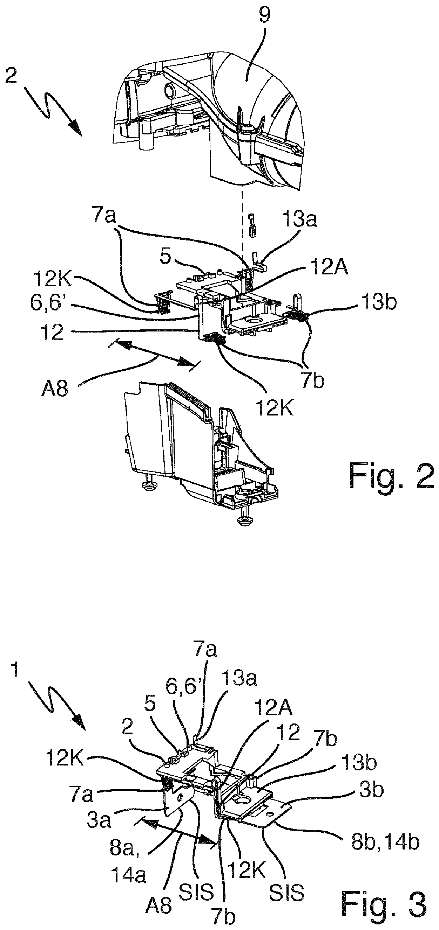

Fig. 1 bis 10 zeigen ein erfindungsgemäßes handgeführtes Bearbeitungssystem 1. Das Bearbeitungssystem 1 weist ein erfindungsgemäßes handgeführtes Bearbeitungsgerät 2 und mindestens ein erfindungsgemäßes Anbauteil 3a, 3b, 3c, 3d auf. Das Bearbeitungsgerät 2 weist ein bewegliches Bearbeitungsteil 4 und ein Elektroantriebsmotorsystem 5 zur Bewegung des Bearbeitungsteils 4 auf. Das Elektroantriebsmotorsystem 5 weist mindestens einen elektrischen Pfad 6 mit mindestens einer Unterbrechung 7a, 7b auf. Das mindestens eine Anbauteil 3a-d weist eine Kontaktbrücke 8a, 8b, 8c, 8d auf. Das Bearbeitungsgerät 2 und das mindestens eine Anbauteil 3a-d sind zur räumlichen Anordnung des mindestens einen Anbauteils 3a-d von einer Gefahrenstellung GES in eine von der Gefahrenstellung GES verschiedene Sicherheitsstellung SIS an dem Bearbeitungsgerät 2 derart ausgebildet, dass durch das mindestens eine Anbauteil 3a-d in der Gefahrenstellung GES die mindestens eine Kontaktbrücke 8a-d die mindestens eine Unterbrechung 7a-b nicht elektrisch überbrückt, wie in Fig. 2, 5 und 10 gezeigt, und dass durch die Anordnung des mindestens einen Anbauteils 3a-d in der Sicherheitsstellung SIS die mindestens eine Kontaktbrücke 8a-d die mindestens eine Unterbrechung 7a-b elektrisch überbrückt, wie in Fig. 1, 3, 4 und 6 bis 8 gezeigt.

Das erfindungsgemäße handgeführte Bearbeitungsgerät 2 ist für das handgeführte Bearbeitungssystem 1 ausgebildet. Das Bearbeitungsgerät 2 weist das bewegliche Bearbeitungsteil 4 und das Elektroantriebsmotorsystem 5 zur Bewegung des Bearbeitungsteils 4 auf. Das Elektroantriebsmotorsystem 5 weist den mindestens einen elektrischen Pfad 6 mit der mindestens einen Unterbrechung 7a-b auf. Das Bearbeitungsgerät 2 ist zur räumlichen Anordnung des mindestens einen Anbauteils 3a-d von der Gefahrenstellung GES in die von der Gefahrenstellung GES verschiedene Sicherheitsstellung SIS an dem Bearbeitungsgerät 2 derart ausgebildet, dass durch das mindestens eine Anbauteil 3a-d in der Gefahrenstellung GES die mindestens eine Kontaktbrücke 8a-d des mindestens einen Anbauteils 3a-d die mindestens eine Unterbrechung 7a-b nicht elektrisch überbrückt, und dass durch die Anordnung des mindestens einen Anbauteils 3a-d in der Sicherheitsstellung SIS die mindestens eine Kontaktbrücke 8a-d die mindestens eine Unterbrechung 7a-b elektrisch überbrückt.

Das erfindungsgemäße Anbauteil 3a-d ist für das handgeführte Bearbeitungssystem 1 ausgebildet. Das Anbauteil 3a-d weist die Kontaktbrücke 8a-d auf. Das Anbauteil 3a-d ist zur räumlichen Anordnung von der Gefahrenstellung GES in die von der Gefahrenstellung GES verschiedene Sicherheitsstellung SIS an dem handgeführten Bearbeitungsgerät 2 derart ausgebildet, dass durch das Anbauteil 3a-d in der Gefahrenstellung GES die Kontaktbrücke 8a-d die Unterbrechung 7a-b des elektrischen Pfads 6 des Elektroantriebsmotorsystems 5 des Bearbeitungsgeräts 2 nicht elektrisch überbrückt, und dass durch die Anordnung des Anbauteils 3a-d in der Sicherheitsstellung SIS die Kontaktbrücke 8a-d die Unterbrechung 7a-b elektrisch überbrückt.

In dem gezeigten Ausführungsbeispiel weist das Bearbeitungssystem 1 vier Anbauteile 3a-d auf. In alternativen Ausführungsbeispielen kann das Bearbeitungssystem nur ein einziges Anbauteil, zwei Anbauteile, drei Anbauteile oder mindestens fünf Anbauteile aufweisen.

Des Weiteren weist in dem gezeigten Ausführungsbeispiel das Elektroantriebsmotorsystem 5 nur einen einzigen elektrischen Pfad 6 auf. In alternativen Ausführungsbeispielen kann das Elektroantriebsmotorsystem mindestens zwei elektrische Pfade aufweisen.

Außerdem weist in dem gezeigten Ausführungsbeispiel der Pfad 6 zwei Unterbrechungen 7a-b auf. In alternativen Ausführungsbeispielen kann der Pfad nur eine einzige Unterbrechung oder mindestens drei Unterbrechungen aufweisen.

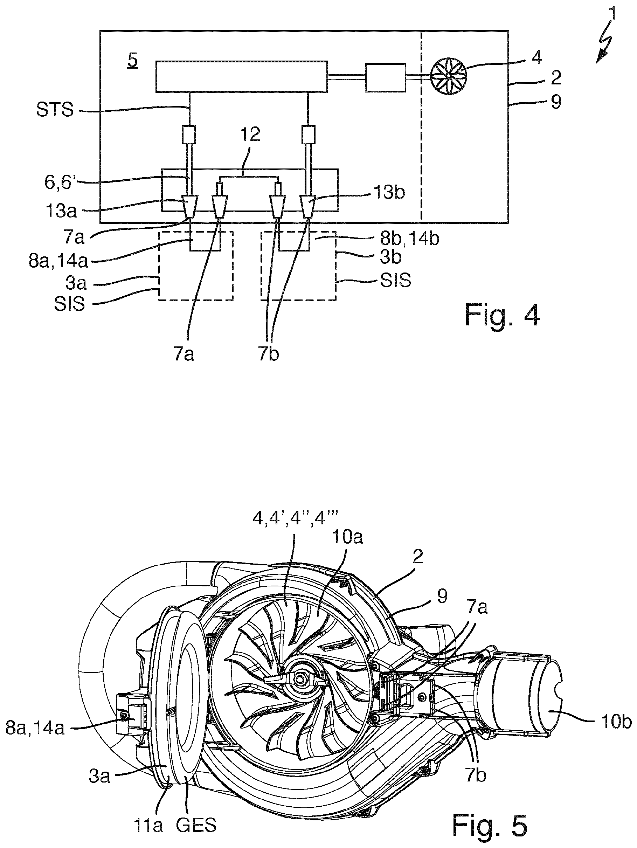

Weiter weist in dem gezeigten Ausführungsbeispiel das Bearbeitungsgerät 2 ein Gerätegehäuse 9 auf. In dem Gerätegehäuse 9 ist das Bearbeitungsteil 4 räumlich angeordnet, wie in Fig. 4 und 5 gezeigt. Das Gerätegehäuse 9 weist mindestens eine Zugangsöffnung 10a, 10b zu dem Bearbeitungsteil 4 auf. Das mindestens eine Anbauteil 3a-d in der Sicherheitsstellung SIS umschließt, insbesondere verschließt, die mindestens eine Zugangsöffnung 10a-b. Das mindestens eine Anbauteil 3a-d in der Gefahrenstellung GES umschließt, insbesondere verschließt, nicht die mindestens eine Zugangsöffnung 10a-b.

In dem gezeigten Ausführungsbeispiel weist das Gerätegehäuse 9 zwei Zugangsöffnungen 10a-b auf. In alternativen Ausführungsbeispielen kann das Gerätegehäuse nur eine einzige Zugangsöffnung oder mindestens drei Zugangsöffnungen aufweisen.

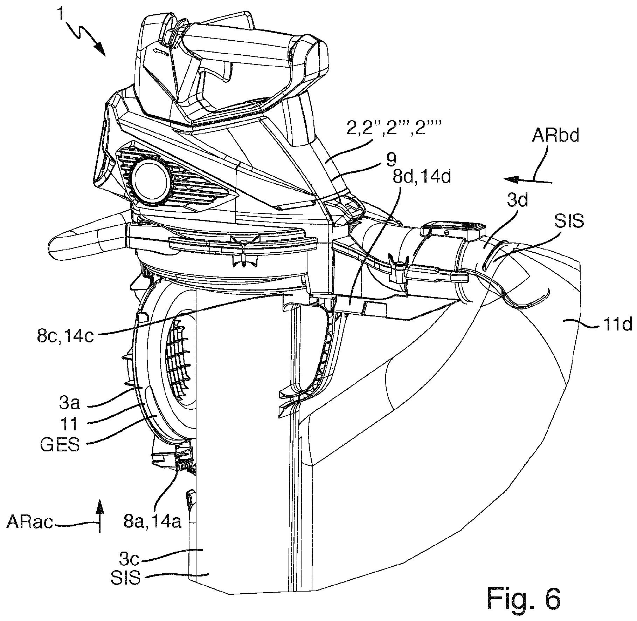

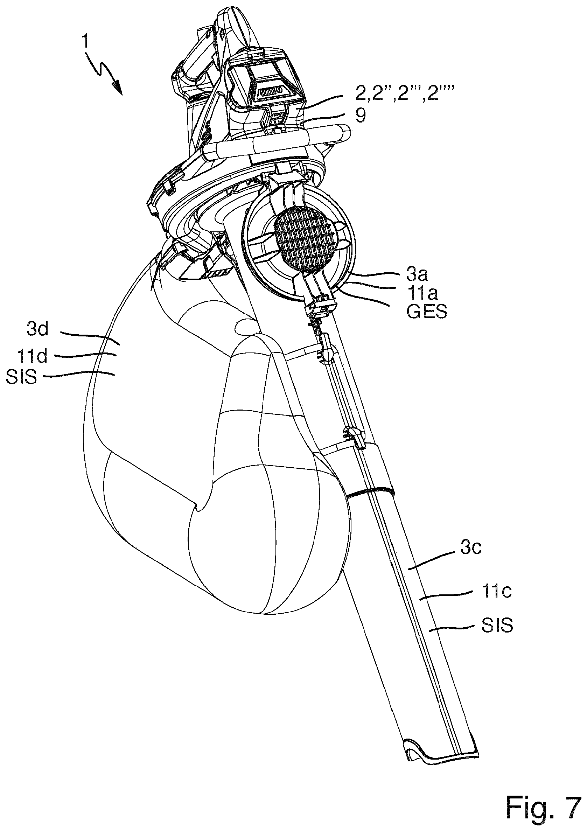

Im Detail ist das Bearbeitungsgerät 2 ein Blasgerät 2', wie in Fig. 1 gezeigt, ein Sauggerät 2" und/oder ein Häckselgerät 2‴, insbesondere ein Saughäckselgerät 2"", wie in Fig. 6 und 7 gezeigt.

Zusätzlich weist das Bearbeitungsteil 4 ein Strömungslaufrad 4' und/oder ein Messerrad 4", insbesondere ein Strömungslauf- und Messerrad 4‴, auf, insbesondere ist das Bearbeitungsteil 4 ein Strömungslaufrad 4' und/oder ein Messerrad 4", insbesondere ein Strömungslauf- und Messerrad 4‴, wie in Fig. 5 gezeigt.

Weiter zusätzlich weist das mindestens eine Anbauteil 3a-d eine Blasleitung 11b, insbesondere ein Blasrohr, eine Saugleitung 11c, insbesondere ein Saugrohr, einen Fangsack 11d und/oder ein Sicherheitsgitter 11a auf.

In dem gezeigten Ausführungsbeispiel kann das Bearbeitungsgerät 2 mit dem Sicherheitsgitter 11a und der Blasleitung 11b als das Blasgerät 2` und mit der Saugleitung 11c und dem Fangsack 11d als das Sauggerät 2", insbesondere das Saughäckselgerät 2ʺʺ, verwendet werden.

In Fig. 1 ist das Anbauteil 3a aufweisend das Sicherheitsgitter 11a in der Sicherheitsstellung SIS an dem Bearbeitungsgerät 2 angeordnet. Durch die Anordnung des Anbauteils 3a aufweisend das Sicherheitsgitter 11a in der Sicherheitsstellung SIS überbrückt elektrisch die Kontaktbrücke 8a die Unterbrechung 7a. Insbesondere verschließt das Anbauteil 3a aufweisend das Sicherheitsgitter 11a in der Sicherheitsstellung SIS die Zugangsöffnung 10a.

Des Weiteren ist in Fig. 1 das Anbauteil 3b aufweisend die Blasleitung 11b in der Sicherheitsstellung SIS an dem Bearbeitungsgerät 2 angeordnet. Durch die Anordnung des Anbauteils 3b aufweisend die Blasleitung 11b in der Sicherheitsstellung SIS überbrückt elektrisch die Kontaktbrücke 8b die Unterbrechung 7b. Insbesondere umschließt das Anbauteil 3b aufweisend die Blasleitung 11b in der Sicherheitsstellung SIS die Zugangsöffnung 10b.

In Fig. 5 ist kein Anbauteil 3a-d in der Sicherheitsstellung SIS an dem Bearbeitungsgerät 2 angeordnet. In anderen Worten: das mindestens eine Anbauteil 3a-d ist in der Gefahrenstellung GES. Durch das mindestens eine Anbauteil 3a-d in der Gefahrenstellung GES überbrückt elektrisch die mindestens eine Kontaktbrücke 8a-d die mindestens eine Unterbrechung 7a-b nicht. Insbesondere umschließt, insbesondere verschließt, das mindestens eine Anbauteil 3a-d in der Gefahrenstellung GES nicht die mindestens eine Zugangsöffnung 10a-b.

In Fig. 5 bis 10 ist das Anbauteil 3a aufweisend das Sicherheitsgitter 11a in der Gefahrenstellung GES. Durch das Anbauteil 3a aufweisend das Sicherheitsgitter 11a in der Gefahrenstellung GES überbrückt elektrisch die Kontaktbrücke 8a die Unterbrechung 7a nicht.

Insbesondere verschließt das Anbauteil 3a aufweisend das Sicherheitsgitter 11a in der Gefahrenstellung GES nicht die Zugangsöffnung 10a.

Außerdem ist in Fig. 6 bis 9 das Anbauteil 3c aufweisend die Saugleitung 11c in der Sicherheitsstellung SIS an dem Bearbeitungsgerät 2 angeordnet. Durch die Anordnung des Anbauteils 3c aufweisend die Saugleitung 11c in der Sicherheitsstellung SIS überbrückt elektrisch die Kontaktbrücke 8c die Unterbrechung 7a. Insbesondere umschließt das Anbauteil 3c aufweisend die Saugleitung 11c in der Sicherheitsstellung SIS die Zugangsöffnung 10a.

Weiter ist in Fig. 6 bis 8 das Anbauteil 3d aufweisend den Fangsack 11d in der Sicherheitsstellung SIS an dem Bearbeitungsgerät 2 angeordnet. Durch die Anordnung des Anbauteils 3d aufweisend den Fangsack 11d in der Sicherheitsstellung SIS überbrückt elektrisch die Kontaktbrücke 8d die Unterbrechung 7b. Insbesondere verschließt das Anbauteil 3d aufweisend den Fangsack 11d in der Sicherheitsstellung SIS die Zugangsöffnung 10b.

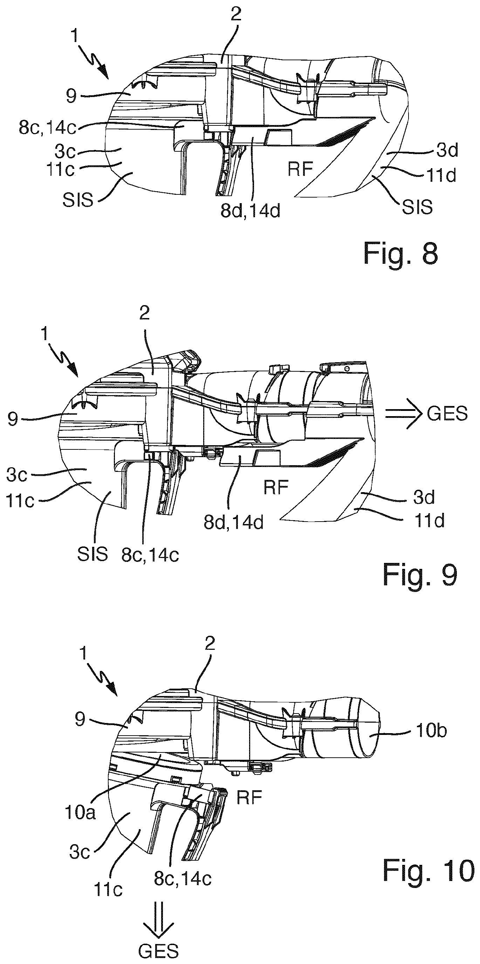

In Fig. 9 ist das Anbauteil 3d aufweisend den Fangsack 11d nicht in der Sicherheitsstellung SIS an dem Bearbeitungsgerät 2 angeordnet, sondern in Richtung Gefahrenstellung GES. Durch das Anbauteil 3d aufweisend den Fangsack 11d nicht in der Sicherheitsstellung SIS, sondern in Richtung Gefahrenstellung GES überbrückt elektrisch die Kontaktbrücke 8d die Unterbrechung 7b nicht.

In Fig. 10 ist das Anbauteil 3d aufweisend den Fangsack 11d in der Gefahrenstellung GES. Durch das Anbauteil 3d aufweisend den Fangsack 11d in der Gefahrenstellung GES überbrückt elektrisch die Kontaktbrücke 8d die Unterbrechung 7b nicht. Insbesondere verschließt das Anbauteil 3d aufweisend den Fangsack 11d in der Gefahrenstellung GES nicht die Zugangsöffnung 10b.

Zudem ist in Fig. 10 das Anbauteil 3c aufweisend die Saugleitung 11c nicht in der Sicherheitsstellung SIS an dem Bearbeitungsgerät 2 angeordnet, sondern in Richtung Gefahrenstellung GES. Durch das Anbauteil 3c aufweisend die Saugleitung 11c nicht in der Sicherheitsstellung SIS, sondern in Richtung Gefahrenstellung GES überbrückt elektrisch die Kontaktbrücke 8c die Unterbrechung 7a nicht.

Im Detail ist das Anbauteil 3a aufweisend das Sicherheitsgitter 11a an dem Bearbeitungsgerät 2 fest angeordnet und zur räumlichen Verstellung, insbesondere Schwenkung, zwischen der Gefahrenstellung GES und der Sicherheitsstellung SIS ausgebildet.

Das Anbauteil 3a aufweisend das Sicherheitsgitter 11a ist in Fig. 1 in die Sicherheitsstellung SIS und in Fig. 5 bis 10 in die Gefahrenstellung GES räumlich verstellt, insbesondere geschwenkt.

Insbesondere weist das Bearbeitungssystem 1, insbesondere die, mindestens zwei Anbauteile 3a-d auf. Die Anbauteile 3a-d weisen jeweils die Kontaktbrücke 8a-d auf.

Zusätzlich sind das Bearbeitungsgerät 2, eines der Anbauteile 3a aufweisend das Sicherheitsgitter 11a in der Gefahrenstellung GES und ein anderes der Anbauteile 3c, insbesondere aufweisend die Saugleitung 11c, zu der Anordnung des anderen Anbauteils 3c in die Sicherheitsstellung SIS des Anbauteils 3a aufweisend das Sicherheitsgitter 11a ausgebildet.

Das andere Anbauteil 3c ist in Fig. 6 bis 9 in die Sicherheitsstellung SIS des Anbauteils 3a aufweisend das Sicherheitsgitter 11a angeordnet.

In dem gezeigten Ausführungsbeispiel sind die Anbauteile 3b-d aufweisend die Blasleitung 11b, die Saugleitung 11c und den Fangsack 11d an dem Bearbeitungsgerät 2 nicht fest angeordnet bzw. von dem Bearbeitungsgerät 2, insbesondere werkzeugfrei und/oder zerstörungsfrei, lösbar ausgebildet.

Weiter zusätzlich weist das Elektroantriebsmotorsystem den, insbesondere mindestens einen, Pfad 6 mit, insbesondere den, mindestens zwei, insbesondere in Serie geschalteten, Unterbrechungen 7a-b auf, wie in Fig. 2 bis 4 gezeigt.

Im Detail weist das Elektroantriebsmotorsystem 5 ein Serienschaltungs-Kontaktstück 12 auf.

Zusätzlich weist das Serienschaltungs-Kontaktstück 12 zwei Kontaktabschnitte 12K zur Kontaktierung der zwei Kontaktbrücken 8a-d und einen Abstandsausgleichsabschnitt 12A zwischen den Kontaktabschnitten 12K zum Ausgleich einer Toleranz eines Abstands A8 zwischen den Kontaktbrücken 8a-d auf.

In Fig. 3 kontaktiert einer der Kontaktabschnitte 12K die Kontaktbrücke 8a und ein anderer der Kontaktabschnitte 12K kontaktiert die Kontaktbrücke 8b.

Weiter zusätzlich sind das Bearbeitungsgerät 2 und die Anbauteile 3a-d zu der Anordnung in die jeweilige Sicherheitsstellung SIS in zueinander nicht-parallelen, insbesondere orthogonalen, Anordnungsrichtungen ARac, ARbd ausgebildet.

In dem gezeigten Ausführungsbeispiel sind das Bearbeitungsgerät 2 und die Anbauteile 3a, 3c aufweisend das Sicherheitsgitter 11a und die Saugleitung 11c zu der Anordnung in die, insbesondere jeweilige, Sicherheitsstellung SIS in der Anordnungsrichtung ARac ausgebildet, insbesondere angeordnet, und das Bearbeitungsgerät 2 und die Anbauteile 3b, 3d aufweisend die Blasleitung 11b und den Fangsack 11d sind zu der Anordnung in die, insbesondere jeweilige, Sicherheitsstellung SIS in der Anordnungsrichtung ARbd ausgebildet, insbesondere angeordnet.

Weiter zusätzlich definieren das Bearbeitungsgerät 2 und die Anbauteile 3a-d eine Reihenfolge zu der Anordnung in die jeweilige Sicherheitsstellung SIS und/oder zu einer Lösung aus der jeweiligen Sicherheitsstellung SIS, wie in Fig. 8 bis 10 gezeigt.

In dem gezeigten Ausführungsbeispiel ist das Anbauteil 3a, 3c aufweisend das Sicherheitsgitter 11a oder die Saugleitung 11c zuerst in die, insbesondere jeweilige, Sicherheitsstellung SIS anzuordnen und zuletzt aus der, insbesondere jeweiligen, Sicherheitsstellung SIS zu lösen und das Anbauteil 3b, 3d aufweisend die Blasleitung 11b oder den Fangsack 11d ist zuletzt in die, insbesondere jeweilige, Sicherheitsstellung SIS anzuordnen und zuerst aus der, insbesondere jeweiligen, Sicherheitsstellung SIS zu lösen.

Insbesondere wird bzw. ist ein Arretierungshebel für das Anbauteil 3a, 3c aufweisend das Sicherheitsgitter 11a oder die Saugleitung 11c von dem Anbauteil 3b, 3d aufweisend die Blasleitung 11b oder den Fangsack 11d angeordnet in der Sicherheitsstellung SIS verdeckt.

Des Weiteren weist das Elektroantriebsmotorsystem 5 mindestens ein Kontaktstück 13a, 13b, insbesondere mindestens zwei Kontaktstücke 13a-b, auf. Das mindestens eine Kontaktstück 13a-b ist, insbesondere sind die Kontaktstücke 13a-b, zur Kontaktierung der mindestens einen Kontaktbrücke 8a-d ausgebildet.

Zusätzlich sind die Kontaktstücke 13a-b baugleich ausgebildet.

In dem gezeigten Ausführungsbeispiel weist das Elektroantriebsmotorsystem 5 zwei Kontaktstücke 13a-b auf. In alternativen Ausführungsbeispielen kann das Elektroantriebsmotorsystem nur ein einziges Kontaktstück oder mindestens drei, insbesondere mindestens vier, Kontaktstücke aufweisen.

In Fig. 3 kontaktiert eines der Kontaktstücke 13a die Kontaktbrücke 8a und ein anderes der Kontaktstücke 13b kontaktiert die Kontaktbrücke 8b.

Weiter zusätzlich sind/ist das Kontaktstück 13a-b und/oder das Serienschaltungs-Kontaktstück 12 schwimmend gelagert.

Insbesondere weist das Bearbeitungsgerät 2, insbesondere das Elektroantriebsmotorsystem 5 eine Montagehilfe zur Montage des Kontaktstücks 13a-b und/oder des Serienschaltungs-Kontaktstücks 12 auf. Die Montagehilfe verbleibt zeitlich nach der Montage an, insbesondere in, dem Bearbeitungsgerät 2.

Außerdem weist die Kontaktbrücke 8a-d eine Steckbrücke 14a-d auf, insbesondere ist die Kontaktbrücke 8a-d eine Steckbrücke 14a-d.

In dem gezeigten Ausführungsbeispiel ist die Steckbrücke eine Steckzungenbrücke.

Weiter ist in dem gezeigten Ausführungsbeispiel die, insbesondere jeweilige, Kontaktbrücke 8a-d derart mit einem anderen Teil des, insbesondere jeweiligen bzw. zugeodneten, Anbauteils 3a-d in Form des Sicherheitsgitters 11a, der Blasleitung 11b, der Saugleitung 11c und/oder des Fangsacks 11d mechanisch verbunden, dass die Kontaktbrücke 8a-d nicht durch den Benutzer von dem anderen Teil des Anbauteils 3a-d gelöst werden kann, insbesondere anders als das Anbauteil 3a-d aus der, insbesondere jeweiligen, Sicherheitsstellung SIS gelöst werden kann.

Zudem ist in dem gezeigten Ausführungsbeispiel der mindestens eine Pfad 6 ein Steuerpfad 6' zur Leitung eines Steuersignals STS.

In alternativen Ausführungsbeispielen kann der mindestens eine Pfad ein Leistungspfad zur Leitung von Antriebsleistung sein.

In dem gezeigten Ausführungsbeispiel wird das Steuersignal STS geleitet bzw. das Elektroantriebsmotorsystem 5 ist zur Bewegung des Bearbeitungsteils 4 ausgebildet, falls die, insbesondere zwei, Kontaktbrücken 8a-d die, insbesondere zwei, Unterbrechungen 7a-b elektrisch überbrücken. Andernfalls, insbesondere falls mindestens eine der Kontaktbrücken 8a-d mindestens eine der Unterbrechungen 7a-b nicht elektrisch überbrückt, wird das Steuersignal STS nicht geleitet bzw. das Elektroantriebsmotorsystem 5 ist zur Bewegung des Bearbeitungsteils 4 nicht ausgebildet bzw. eine Bewegung des Bearbeitungsteils 4 durch das Elektroantriebssystem 5 wird bzw. ist vermieden bzw. verhindert.

Wie die gezeigten und zuvor beschriebenen Ausführungsbeispiele deutlich machen, stellt die Erfindung ein handgeführtes Bearbeitungssystem, ein handgeführtes Bearbeitungsgerät für ein handgeführtes Bearbeitungssystem und/oder ein Anbauteil für ein handgeführtes Bearbeitungssystem bereit, das, insbesondere jeweils, verbesserte Eigenschaften aufweist, insbesondere benutzersicherer und benutzerfreundlicher ist.

## Patentansprüche

1. Handgeführtes Bearbeitungssystem (1), wobei das Bearbeitungssystem (1) aufweist:
- ein handgeführtes Bearbeitungsgerät (2) und mindestens ein Anbauteil (3a, 3b, 3c, 3d),
- wobei das Bearbeitungsgerät (2) ein bewegliches Bearbeitungsteil (4) und ein Elektroantriebsmotorsystem (5) zur Bewegung des Bearbeitungsteils (4) aufweist, wobei das Elektroantriebsmotorsystem (5) mindestens einen elektrischen Pfad (6) mit mindestens einer Unterbrechung (7a, 7b) aufweist, und
- wobei das mindestens eine Anbauteil (3a-d) eine Kontaktbrücke (8a, 8b, 8c, 8d) aufweist, und
- wobei das Bearbeitungsgerät (2) und das mindestens eine Anbauteil (3a-d) zur räumlichen Anordnung des mindestens einen Anbauteils (3a-d) von einer Gefahrenstellung (GES) in eine von der Gefahrenstellung (GES) verschiedene Sicherheitsstellung (SIS) an dem Bearbeitungsgerät (2) derart ausgebildet sind,
- dass durch das mindestens eine Anbauteil (3a-d) in der Gefahrenstellung (GES) die mindestens eine Kontaktbrücke (8a-d) die mindestens eine Unterbrechung (7a-b) nicht elektrisch überbrückt, und
- dass durch die Anordnung des mindestens einen Anbauteils (3a-d) in der Sicherheitsstellung (SIS) die mindestens eine Kontaktbrücke (8a-d) die mindestens eine Unterbrechung (7a-b) elektrisch überbrückt,
- wobei das Bearbeitungsgerät (2) ein Blasgerät (2'), ein Sauggerät (2") und/oder ein Häckselgerät (2‴), insbesondere ein Saughäckselgerät (2""), ist.

2. Handgeführtes Bearbeitungssystem (1) nach Anspruch 1,
- wobei das Bearbeitungsgerät (2) ein Gerätegehäuse (9) aufweist, wobei in dem Gerätegehäuse (9) das Bearbeitungsteil (4) räumlich angeordnet ist, und wobei das Gerätegehäuse (9) mindestens eine Zugangsöffnung (10a, 10b) zu dem Bearbeitungsteil (4) aufweist, und
- wobei das mindestens eine Anbauteil (3a-d) in der Sicherheitsstellung (SIS) die mindestens eine Zugangsöffnung (10a-b) umschließt, insbesondere verschließt, und wobei das mindestens eine Anbauteil (3a-d) in der Gefahrenstellung (GES) die mindestens eine Zugangsöffnung (10a-b) nicht umschließt, insbesondere nicht verschließt.

3. Handgeführtes Bearbeitungssystem (1) nach einem der vorhergehenden Ansprüche,
- wobei das Bearbeitungsteil (4) ein Strömungslaufrad (4') und/oder ein Messerrad (4"), insbesondere ein Strömungslauf- und Messerrad (4‴), aufweist, insbesondere ist, und/oder
- wobei das mindestens eine Anbauteil (3a-d) eine Blasleitung (11b), insbesondere ein Blasrohr, eine Saugleitung (11c), insbesondere ein Saugrohr, einen Fangsack (11d) und/oder ein Sicherheitsgitter (11a) aufweist.

4. Handgeführtes Bearbeitungssystem (1) nach Anspruch 3,
- wobei das Anbauteil (3a) aufweisend das Sicherheitsgitter (11a) an dem Bearbeitungsgerät (2) fest angeordnet ist und zur räumlichen Verstellung, insbesondere Schwenkung, zwischen der Gefahrenstellung (GES) und der Sicherheitsstellung (SIS) ausgebildet ist.

5. Handgeführtes Bearbeitungssystem (1) nach Anspruch 4,
- wobei das Bearbeitungssystem (1) mindestens zwei Anbauteile (3a-d) aufweist,
- wobei das Bearbeitungsgerät (2), eines der Anbauteile (3a) aufweisend das Sicherheitsgitter (11a) in der Gefahrenstellung (GES) und ein anderes der Anbauteile (3c) zu der Anordnung des anderen Anbauteils (3c) in die Sicherheitsstellung (SIS) des Anbauteils (3a) aufweisend das Sicherheitsgitter (11a) ausgebildet sind.

6. Handgeführtes Bearbeitungssystem (1) nach einem der vorhergehenden Ansprüche,
- wobei das Bearbeitungssystem (1) mindestens zwei Anbauteile (3a-d) aufweist,
- wobei das Elektroantriebsmotorsystem (5) den Pfad (6) mit mindestens zwei in Serie geschalteten Unterbrechungen (7a-b) aufweist, und
- wobei die Anbauteile (3a-d) jeweils die Kontaktbrücke (8a-d) aufweisen.

7. Handgeführtes Bearbeitungssystem (1) nach Anspruch 6,
- wobei das Elektroantriebsmotorsystem (5) ein Serienschaltungs-Kontaktstück (12) aufweist, wobei das Serienschaltungs-Kontaktstück (12) zwei Kontaktabschnitte (12K) zur Kontaktierung der zwei Kontaktbrücken (8a-d) und einen Abstandsausgleichsabschnitt (12A) zwischen den Kontaktabschnitten (12K) zum Ausgleich einer Toleranz eines Abstands (A8) zwischen den Kontaktbrücken (8a-d) aufweist.

8. Handgeführtes Bearbeitungssystem (1) nach einem der vorhergehenden Ansprüche,
- wobei das Bearbeitungssystem (1) mindestens zwei Anbauteile (3a-d) aufweist,
- wobei das Elektroantriebsmotorsystem (5) den mindestens einen Pfad (6) mit mindestens zwei Unterbrechungen (7a-b) aufweist, und
- wobei die Anbauteile (3a-d) jeweils die Kontaktbrücke (8a-d) aufweisen, und
- wobei das Bearbeitungsgerät (2) und die Anbauteile (3a-d) zu der Anordnung in die jeweilige Sicherheitsstellung (SIS) in zueinander nicht-parallelen, insbesondere orthogonalen, Anordnungsrichtungen (ARac, ARbd) ausgebildet sind.

9. Handgeführtes Bearbeitungssystem (1) nach einem der vorhergehenden Ansprüche,
- wobei das Bearbeitungssystem (1) mindestens zwei Anbauteile (3a-d) aufweist,
- wobei das Elektroantriebsmotorsystem (5) den mindestens einen Pfad (6) mit mindestens zwei Unterbrechungen (7a-b) aufweist, und
- wobei die Anbauteile (3a-d) jeweils die Kontaktbrücke (8a-d) aufweisen, und
- wobei das Bearbeitungsgerät (2) und die Anbauteile (3a-d) eine Reihenfolge (RF) zu der Anordnung in die jeweilige Sicherheitsstellung (SIS) und/oder zu einer Lösung aus der jeweiligen Sicherheitsstellung (SIS) definieren.

10. Handgeführtes Bearbeitungssystem (1) nach einem der vorhergehenden Ansprüche,
- wobei das Elektroantriebsmotorsystem (5) mindestens zwei Kontaktstücke (13a, 13b) aufweist, wobei die Kontaktstücke (13a-b) zur Kontaktierung der mindestens einen Kontaktbrücke (8a-d) und baugleich ausgebildet sind.

11. Handgeführtes Bearbeitungssystem (1) nach einem der vorhergehenden Ansprüche,
- wobei das Elektroantriebsmotorsystem (5) mindestens ein Kontaktstück (13a-b) und/oder ein Serienschaltungs-Kontaktstück (12) aufweist, wobei das Kontaktstück (13ab) und/oder das Serienschaltungs-Kontaktstück (12) zur Kontaktierung der mindestens einen Kontaktbrücke (8a-d) ausgebildet und schwimmend gelagert sind/ist.

12. Handgeführtes Bearbeitungssystem (1) nach einem der vorhergehenden Ansprüche,
- wobei die Kontaktbrücke (8a-d) eine Steckbrücke (14a-d) aufweist, insbesondere ist.

13. Handgeführtes Bearbeitungssystem (1) nach einem der vorhergehenden Ansprüche,
- wobei der mindestens eine Pfad (6) ein Leistungspfad zur Leitung von Antriebsleistung und/oder ein Steuerpfad (6') zur Leitung eines Steuersignals (STS) ist.

14. Handgeführtes Bearbeitungsgerät (2) für ein handgeführtes Bearbeitungssystem (1) nach einem der vorhergehenden Ansprüche, wobei das Bearbeitungsgerät (2) aufweist:
- ein bewegliches Bearbeitungsteil (4) und ein Elektroantriebsmotorsystem (5) zur Bewegung des Bearbeitungsteils (4), wobei das Elektroantriebsmotorsystem (5) mindestens einen elektrischen Pfad (6) mit mindestens einer Unterbrechung (7a-b) aufweist, und
- wobei das Bearbeitungsgerät (2) zur räumlichen Anordnung mindestens eines Anbauteils (3a-d) von einer Gefahrenstellung (GES) in eine von der Gefahrenstellung (GES) verschiedene Sicherheitsstellung (SIS) an dem Bearbeitungsgerät (2) derart ausgebildet ist,
- dass durch das mindestens eine Anbauteil (3a-d) in der Gefahrenstellung (GES) mindestens eine Kontaktbrücke (8a-d) des mindestens einen Anbauteils (3a-d) die mindestens eine Unterbrechung (7a-b) nicht elektrisch überbrückt, und
- dass durch die Anordnung des mindestens einen Anbauteils (3a-d) in der Sicherheitsstellung (SIS) die mindestens eine Kontaktbrücke (8a-d) die mindestens eine Unterbrechung (7a-b) elektrisch überbrückt,
- wobei das Bearbeitungsgerät (2) ein Blasgerät (2'), ein Sauggerät (2") und/oder ein Häckselgerät (2‴), insbesondere ein Saughäckselgerät (2""), ist.

15. Anbauteil (3a-d) für ein handgeführtes Bearbeitungssystem (1) nach einem der Ansprüche 1 bis 13, wobei das Anbauteil (3a-d) aufweist:
- eine Kontaktbrücke (8a-d), und
- wobei das Anbauteil (3a-d) zur räumlichen Anordnung von einer Gefahrenstellung (GES) in eine von der Gefahrenstellung (GES) verschiedene Sicherheitsstellung (SIS) an einem handgeführten Bearbeitungsgerät (2) derart ausgebildet ist,
- dass durch das Anbauteil (3a-d) in der Gefahrenstellung (GES) die Kontaktbrücke (8a-d) eine Unterbrechung (7a-b) eines elektrischen Pfads (6) eines Elektroantriebsmotorsystems (5) des Bearbeitungsgeräts (2) nicht elektrisch überbrückt, und
- dass durch die Anordnung des Anbauteils (3a-d) in der Sicherheitsstellung (SIS) die Kontaktbrücke (8a-d) die Unterbrechung (7a-b) elektrisch überbrückt,
- wobei das Anbauteil (3a-d) eine Blasleitung (11b), insbesondere ein Blasrohr, eine Saugleitung (11c), insbesondere ein Saugrohr, einen Fangsack (11d) und/oder ein Sicherheitsgitter (11a) aufweist.

## Claims

1. Hand-held treatment system (1), wherein the treatment system (1) exhibits:
- a hand-held treatment device (2) and at least one attachment (3a, 3b, 3c, 3d),
- wherein the treatment device (2) exhibits a movable treatment part (4) and an electric drive motor system (5) for moving the treatment part (4), wherein the electric drive motor system (5) exhibits at least one electrical path (6) with at least one interruption (7a, 7b), and
- wherein the at least one attachment (3a-d) exhibits a contact bridge (8a, 8b, 8c, 8d), and
- wherein the treatment device (2) and the at least one attachment (3a-d) are configured for the spatial arrangement of the at least one attachment (3a-d) from a hazard position (GES) into a safety position (SIS), which is different from the hazard position (GES), on the treatment device (2) in such a manner that
- by the at least one attachment (3a-d) in the hazard position (GES), the at least one contact bridge (8a-d) does not electrically bridge the at least one interruption (7a-b), and
- by the arrangement of the at least one attachment (3a-d) in the safety position (SIS), the at least one contact bridge (8a-d) electrically bridges the at least one interruption (7a-b),
- wherein the treatment device (2) is a blower (2'), a vacuum device (2") and/or a shredder (2"'), in particular a vacuum shredder (2"").

2. Hand-held treatment system (1) according to Claim 1,
- wherein the treatment device (2) exhibits a device housing (9), wherein the treatment part (4) is spatially arranged in the device housing (9), and wherein the device housing (9) exhibits at least one access opening (10a, 10b) to the treatment part (4), and
- wherein the at least one attachment (3a-d) in the safety position (SIS) encloses, in particular closes off, the at least one access opening (10a-b), and wherein the at least one attachment (3a-d) in the hazard position (GES) does not enclose, in particular does not close off, the at least one access opening (10a-b).

3. Hand-held treatment system (1) according to either of the preceding claims,
- wherein the treatment part (4) exhibits, in particular is, a flow impeller wheel (4') and/or a cutting wheel (4"), in particular a flow impeller and cutting wheel (4"'), and/or
- wherein the at least one attachment (3a-d) exhibits a blow line (11b), in particular a blow pipe, a vacuum line (11c), in particular a vacuum pipe, a collection bag (11d) and/or a safety guard (11a).

4. Hand-held treatment system (1) according to Claim 3,
- wherein the attachment (3a) exhibiting the safety guard (11a) is fixedly arranged on the treatment device (2) and is configured for spatial adjustment, in particular pivoting, between the hazard position (GES) and the safety position (SIS).

5. Hand-held treatment system (1) according to Claim 4,
- wherein the treatment system (1) exhibits at least two attachments (3a-d),
- wherein the treatment device (2), one of the attachments (3a) exhibiting the safety guard (11a) in the hazard position (GES) and another of the attachments (3c) are configured for the arrangement of the other attachment (3c) into the safety position (SIS) of the attachment (3a) exhibiting the safety guard (11a).

6. Hand-held treatment system (1) according to one of the preceding claims,
- wherein the treatment system (1) exhibits at least two attachments (3a-d),
- wherein the electric drive motor system (5) exhibits the path (6) with at least two interruptions (7a-b) connected in series, and
- wherein the attachments (3a-d) in each case exhibit the contact bridge (8a-d).

7. Hand-held treatment system (1) according to Claim 6,
- wherein the electric drive motor system (5) exhibits a series-connected contact piece (12), wherein the series-connected contact piece (12) exhibits two contact portions (12K) for contacting the two contact bridges (8a-d) and a distance-compensating portion (12A) between the contact portions (12K) for compensating a tolerance of a distance (A8) between the contact bridges (8a-d).

8. Hand-held treatment system (1) according to one of the preceding claims,
- wherein the treatment system (1) exhibits at least two attachments (3a-d),
- wherein the electric drive motor system (5) exhibits the at least one path (6) with at least two interruptions (7a-b), and
- wherein the attachments (3a-d) in each case exhibit the contact bridge (8a-d), and
- wherein the treatment device (2) and the attachments (3a-d) are configured for arrangement into the respective safety position (SIS) in mutually non-parallel, in particular orthogonal, arrangement directions (ARac, ARbd).

9. Hand-held treatment system (1) according to one of the preceding claims,
- wherein the treatment system (1) exhibits at least two attachments (3a-d),
- wherein the electric drive motor system (5) exhibits the at least one path (6) with at least two interruptions (7a-b), and
- wherein the attachments (3a-d) in each case exhibit the contact bridge (8a-d), and
- wherein the treatment device (2) and the attachments (3a-d) define an order (RF) for arrangement into the respective safety position (SIS) and/or for release from the respective safety position (SIS).

10. Hand-held treatment system (1) according to one of the preceding claims,
- wherein the electric drive motor system (5) exhibits at least two contact pieces (13a, 13b), wherein the contact pieces (13a-b) are configured for contacting the at least one contact bridge (8a-d) and are identically constructed.

11. Hand-held treatment system (1) according to one of the preceding claims,
- wherein the electric drive motor system (5) exhibits at least one contact piece (13a-b) and/or a series-connected contact piece (12), wherein the contact piece (13a-b) and/or the series-connected contact piece (12) are/is configured for contacting the at least one contact bridge (8a-d) and are/is mounted in a floating manner.

12. Hand-held treatment system (1) according to one of the preceding claims,
- wherein the contact bridge (8a-d) exhibits, in particular is, a jumper (14a-d).

13. Hand-held treatment system (1) according to one of the preceding claims,
- wherein the at least one path (6) is a power path for transmitting drive power and/or a control path (6') for transmitting a control signal (STS).

14. Hand-held treatment device (2) for a hand-held treatment system (1) according to one of the preceding claims, wherein the treatment device (2) exhibits:
- a movable treatment part (4) and an electric drive motor system (5) for moving the treatment part (4), wherein the electric drive motor system (5) exhibits at least one electrical path (6) with at least one interruption (7a-b), and
- wherein the treatment device (2) is configured for the spatial arrangement of at least one attachment (3a-d) from a hazard position (GES) into a safety position (SIS), which is different from the hazard position (GES), on the treatment device (2) in such a manner that
- by the at least one attachment (3a-d) in the hazard position (GES), at least one contact bridge (8a-d) of the at least one attachment (3a-d) does not electrically bridge the at least one interruption (7a-b), and
- by the arrangement of the at least one attachment (3a-d) in the safety position (SIS), the at least one contact bridge (8a-d) electrically bridges the at least one interruption (7a-b),
- wherein the treatment device (2) is a blower (2'), a vacuum device (2") and/or a shredder (2"'), in particular a vacuum shredder (2"").

15. Attachment (3a-d) for a hand-held treatment system (1) according to one of Claims 1 to 13, wherein the attachment (3a-d) exhibits:
- a contact bridge (8a-d), and
- wherein the attachment (3a-d) is configured for spatial arrangement from a hazard position (GES) into a safety position (SIS), which is different from the hazard position (GES), on a hand-held treatment device (2) in such a manner that
- by the attachment (3a-d) in the hazard position (GES), the contact bridge (8a-d) does not electrically bridge an interruption (7a-b) of an electrical path (6) of an electric drive motor system (5) of the treatment device (2), and
- by the arrangement of the attachment (3a-d) in the safety position (SIS), the contact bridge (8a-d) electrically bridges the interruption (7a-b),
- wherein the at least one attachment (3a-d) exhibits a blow line (11b), in particular a blow pipe, a vacuum line (11c), in particular a vacuum pipe, a collection bag (11d) and/or a safety guard (11a).

## Revendications

1. Système d'usinage (1) guidé à la main, le système d'usinage (1) comportant :
- un appareil d'usinage (2) guidé à la main et au moins un accessoire (3a, 3b, 3c, 3d),
- l'appareil d'usinage (2) comportant un élément d'usinage mobile (4) et un système de moteur d'entraînement électrique (5) destiné à la mise en mouvement de l'élément d'usinage (4), le système de moteur d'entraînement électrique (5) comportant au moins une voie électrique (6) ayant au moins une interruption (7a, 7b), et
- ledit au moins un accessoire (3a-d) comportant un pont de contact (8a, 8b, 8c, 8d), et
- l'appareil d'usinage (2) et ledit au moins un accessoire (3a-d) étant configurés pour la disposition spatiale dudit au moins une accessoire (3a-d) d'une position de danger (GES) en une position de sécurité (SIS) différente de la position de danger (GES) sur l'appareil d'usinage (2), de façon telle
- que, en raison dudit au moins un accessoire (3a-d) dans la position de danger (GES), ledit au moins un pont de contact (8a-d) ne court-circuite pas électriquement ladite au moins une interruption (7a-b), et
- que, en raison dudit au moins un accessoire (3a-d) dans la position de sécurité (SIS), ledit au moins un pont de contact (8a-d) court-circuite électriquement ladite au moins une interruption (7a-b),
- l'appareil d'usinage (2) étant un appareil de soufflage (2'), un appareil d'aspiration (2'') et/ou un appareil de hachage (2‴), en particulier un appareil de hachage-aspiration (2ʺʺ).

2. Système d'usinage (1) guidé à la main selon la revendication 1,
- dans lequel l'appareil d'usinage (2) comporte un boîtier (9) d'appareil, l'élément d'usinage (4) étant disposé spatialement dans le boîtier (9) d'appareil, et le boîtier (9) d'appareil présentant au moins une ouverture d'accès (10a, 10b) à l'élément d'usinage(4), et
- dans lequel, dans la position de sécurité (SIS) ledit au moins un accessoire (3a-d) entoure, en particulier enferme, ladite au moins une ouverture d'accès (10a-b), et dans lequel ledit au moins un accessoire (3a-d) dans la position de danger (GES) n'entoure pas, en particulier n'enferme pas, ladite au moins une ouverture d'accès (10a-b).

3. Système d'usinage (1) guidé à la main selon l'une quelconque des revendications précédentes,
- dans lequel l'élément d'usinage (4) comporte, en particulier consiste en, une roue de flux (4') et/ou une roue à couteaux (4''), en particulier une roue de flux et à couteaux (4‴), et/ou
- dans lequel ledit au moins un accessoire (3a-d) comporte un conduit de soufflage (11b), en particulier un tube de soufflage, un conduit d'aspiration (11c), en particulier un tube d'aspiration, un sac de collecte (11d) et/ou une grille de sécurité (11a).

4. Système d'usinage (1) guidé à la main selon la revendication 3,
- dans lequel l'accessoire (3a) comportant la grille de sécurité (11a) est disposé de façon fixe sur l'appareil d'usinage (2) et est configuré pour le déplacement spatial, en particulier le pivotement, entre la position de danger (GES) et la position de sécurité (SIS) .

5. Système d'usinage (1) guidé à la main selon la revendication 4,
- dans lequel le système d'usinage (1) comporte au moins deux accessoires (3a-d),
- dans lequel l'appareil d'usinage (2), l'un des accessoires (3a) comportant la grille de sécurité (11a) dans la position de danger (GES) et un autre des accessoires (3c) sont configurés pour la disposition de l'autre accessoire (3c) dans la position de sécurité (SIS) de l'accessoire (3a) comportant la grille de sécurité (11a).

6. Système d'usinage (1) guidé à la main selon l'une quelconque des revendications précédentes,
- dans lequel le système d'usinage (1) comporte au moins deux accessoires (3a-d),
- dans lequel le système de moteur d'entraînement électrique (5) comporte la voie (6) ayant au moins deux interruptions (7a-b) montées en série, et
- dans lequel les accessoires (3a-d) comportent chacun le pont de contact (8a-d).

7. Système d'usinage (1) guidé à la main selon la revendication 6,
- dans lequel le système de moteur d'entraînement électrique (5) comporte une pièce de contact (12) de montage en série, la pièce de contact (12) de montage en série comportant deux segments de contact (12K) destinés à l'établissement de contact des deux ponts de contact (8a-d) et un segment de compensation de distance (12A) entre les segments de contact (12K) pour la compensation d'une tolérance d'une distance (A8) entre les ponts de contact (8a-d).

8. Système d'usinage (1) guidé à la main selon l'une quelconque des revendications précédentes,
- dans lequel le système d'usinage (1) comporte au moins deux accessoires (3a-d),
- dans lequel le système de moteur d'entraînement électrique (5) comporte ladite au moins une voie (6) ayant au moins deux interruptions (7a-b), et
- dans lequel les accessoires (3a-d) comportent chacun le pont de contact (8a-d), et
- dans lequel l'appareil d'usinage (2) et les accessoires (3a-d) sont configurés pour la disposition dans la position de sécurité respective (SIS) dans des directions de disposition (ARac, ARbd) non parallèles entre elles, en particulier orthogonales.

9. Système d'usinage (1) guidé à la main selon l'une quelconque des revendications précédentes,
- dans lequel le système d'usinage (1) comporte au moins deux accessoires (3a-d),
- dans lequel le système de moteur d'entraînement électrique (5) comporte ladite au moins une voie (6) ayant au moins deux interruptions (7a-b), et
- dans lequel les accessoires (3a-d) comportent chacun le pont de contact (8a-d), et
- dans lequel l'appareil d'usinage (2) et les accessoires (3a-d) définissent un ordre (RF) pour la disposition dans la position de sécurité (SIS) respective et/ou pour une libération depuis la position de sécurité respective (SIS).

10. Système d'usinage (1) guidé à la main selon l'une quelconque des revendications précédentes,
- dans lequel le système de moteur d'entraînement électrique (5) comporte au moins deux pièces de contact (13a, 13b), les pièces de contact (13a-b) étant configurées pour l'établissement de contact avec ledit au moins un pont de contact (8a-d) et étant de même construction.

11. Système d'usinage (1) guidé à la main selon l'une quelconque des revendications précédentes,
- dans lequel le système de moteur d'entraînement électrique (5) comporte au moins une pièce de contact (13a-b) et/ou une pièce de contact de montage en série (12), la pièce de contact (13a-b) et/ou la pièce de contact de montage en série (12) étant configurée(s) pour l'établissement de contact avec ledit au moins un pont de contact (8a-d) et étant supportée(s) de manière flottante.

12. Système d'usinage (1) guidé à la main selon l'une quelconque des revendications précédentes,
- dans lequel le pont de contact (8a-d) comporte, en particulier consiste en, un pont enfichable (14a-d).

13. Système d'usinage (1) guidé à la main selon l'une quelconque des revendications précédentes,
- dans lequel ladite au moins une voie (6) est une voie de puissance destinée à la conduction de puissance d'entraînement et/ou une voie de commande (6') destinée à la conduction d'un signal de commande (STS).

14. Appareil d'usinage (2) guidé à la main pour un système d'usinage (1) guidé à la main selon l'une quelconque des revendications précédentes, l'appareil d'usinage (2) comprenant :
- un élément d'usinage mobile (4) et un système de moteur d'entraînement électrique (5) destiné à la mise en mouvement de l'élément d'usinage (4), le système de moteur d'entraînement électrique (5) comportant au moins une voie électrique (6) ayant au moins une interruption (7a-b), et
- l'appareil d'usinage (2) étant configuré pour la disposition spatiale d'au moins une accessoire (3a-d) d'une position de danger (GES) en une position de sécurité (SIS) différente de la position de danger (GES) sur l'appareil d'usinage (2), de façon telle
- que, en raison dudit au moins un accessoire (3a-d) dans la position de danger (GES), au moins un pont de contact (8a-d) dudit au moins un accessoire (3a-d) ne court-circuite pas électriquement ladite au moins une interruption (7a-b), et
- que, en raison dudit au moins un accessoire (3a-d) dans la position de sécurité (SIS), ledit au moins un pont de contact (8a-d) court-circuite électriquement ladite au moins une interruption (7a-b),
- l'appareil d'usinage (2) étant un appareil de soufflage (2'), un appareil d'aspiration (2'') et/ou un appareil de hachage (2‴), en particulier un appareil de hachage-aspiration (2ʺʺ).

15. Accessoire (3a-d) pour un système d'usinage (1) guidé à la main selon l'une quelconque des revendications 1 à 13, dans lequel l'accessoire (3a-d) comporte :
- un pont de contact (8a-d), et
- dans lequel l'accessoire (3a-d) est configuré pour la disposition spatiale d'une position de danger (GES) en une position de sécurité (SIS) différente de la position de danger (GES) sur un appareil d'usinage (2) guidé à la main, de façon telle
- que, en raison de l'accessoire (3a-d) dans la position de danger (GES), le pont de contact (8a-d) ne court-circuite pas électriquement une interruption (7a-b) d'une voie électrique (6) d'un système de moteur d'entraînement électrique (5) de l'appareil d'usinage (2), et
- que, en raison de la disposition de l'accessoire (3a-d) dans la position de sécurité (SIS) le pont de contact (8a-d) court-circuite électriquement l'interruption (7a-b),
- dans lequel l'accessoire (3a-d) comporte un conduit de soufflage (11b), en particulier un tube de soufflage, un conduit d'aspiration (11c), en particulier un tube d'aspiration, un sac de collecte (11d) et/ou une grille de sécurité (11a).
